Europäisches Patentamt

**European Patent Office**

**Office européen des brevets**

(11) Numéro de publication: **0 189 353**
A2

# (12) DEMANDE DE BREVET EUROPEEN

(21) Numéro de dépôt: 86400127.6

(22) Date de dépôt: 22.01.86

(51) Int. Cl.⁴: **A 61 C 13/00**

(30) Priorité: 23.01.85 FR 8500914

(43) Date de publication de la demande: 30.07.86
Bulletin 86/31

(84) Etats contractants désignés: **DE GB IT SE**

(71) Demandeur: **Miara, Paul, 24, rue du Rocher,
F-75009 Paris (FR)**

(72) Inventeur: **Miara, Paul, 24, rue du Rocher, F-75009 Paris
(FR)**

(74) Mandataire: **Loyer, Bertrand et al, Cabinet Pierre
Loyer 18, rue de Mogador, F-75009 Paris (FR)**

(54) Procédé de fabrication d'armatures métalliques de prothèses dentaires collées et matériau composite utilisé.

(57) Procédé de fabrication d'armatures métalliques de prothèses dentaires destinées à être collées contre des entailles pratiquées sur les dents de support, lesdites armatures
étant moulées selon la technique de la cire perdue. Lors de
l'élaboration de la maquette en cire, on applique contre la
paroi de l'entaille (2) reproduite sur le modèle de travail (1),
une multiplicité de billes (5) en matière plastique calcinable,
qui sont ensuite recouvertes par la cire (7).

Procédé de fabrication d'armatures métalliques de prothèses dentaires collées et matériau composite utilisé.

La présente invention a pour objet un procédé de fabrication de prothèses dentaires collées telles par exemple que des bridges et un produit particulier pour la mise en oeuvre de ce procédé.

Il est connu de réaliser des bridges en réalisant une armature métallique qui supporte en son centre la dent artificielle en céramique et comporte deux ailettes latérales qui sont destinées à être collées sur les dents saines qui doivent porter la prothèse.

Pour fabriquer cette prothèse, on commence par faire une entaille superficielle sur les parois verticales internes des deux dents de support, cette entaille étant peu profonde et n'étant faite pratiquement que dans l'émail ; puis on fait un moulage de la portion de machoire correspondante de façon à obtenir un modèle sur laquelle on travaille pour réaliser la prothèse. Selon le procédé connu, on coule de la cire liquide dans les entailles, on joint les deux ailettes en cire ainsi réalisées par une barrette en résine calcinable autour de laquelle on réalise, à la cire, le noyau de support de la dent à remplacer. La maquette ainsi réalisée est retirée du modèle de travail et par la technique bien connue de coulée à cire perdue, on réalise l'armature métallique de la prothèse. Il n'y a plus qu'à élaborer la dent artificielle en céramique autour du noyau central de support et la prothèse est prête. Elle est alors mise en place par collage.

Les matériaux de collage utilisés actuellement permettent une excellente liaison au niveau de l'émail des dents supports grâce aux techniques de mordançage, qui réalisent dans l'émail des anfractuosités de l'ordre de 10 à 15 microns. Par contre au niveau de l'intrados des surfaces métalliques des ailettes, la colle ne pourra assurer une bonne liaison que s'il existe des macro ou microrétentions : en effet sur une surface métallique lisse, la colle n'a qu'un très faible pouvoir adhésif.

Jusqu'à présent, on réalise un état de surface comportant de telles rétentions soit par des moyens mécaniques soit par attaque chimique.

La présente invention a pour objet un procédé permettant d'obtenir directement en sortie de coulée des ailettes dont la surface présente une multitude d'anfractuosités permettant un microclavetage du matériau de collage.

Ce procédé consiste à disposer sur l'intrados des ailettes de la maquette en cire une couche de billes en matière plastique calcinable d'un diamètre d'environ 1/10 de mm ; de telle sorte que l'intrados des ailettes de l'armature métallique de la prothèse comporte en sortie de coulée une surface parsemée de sphères métalliques d'environ 0,1 millimètres de diamètre, collées les unes aux autres et ménageant entre elles une multiplicité d'anfractuosités dans lesquelles peut s'immiscer le matériau de collage.

De préférence, pour la réalisation de la maquette en cire, on applique sur les surfaces du modèle du travail un film plastique doublement encollé dont une face est recouverte d'une multiplicité de petites billes et dont l'autre face est recouverte de cire.

L'invention concerne également à titre de produit industriel nouveau un matériau composite en feuille constitué par un film plastique doublement encollé dont une face est recouverte d'une multiplicité de petites billes et dont l'autre face est recouverte d'une couche uniforme de cire, l'épaisseur totale de la feuille de matériau composite ainsi réalisée étant d'environ 0,3 millimètre.

A titre d'exemple non limitatif et pour faciliter la compréhension de l'invention, on a représenté aux dessins annexés :

Figure 1, une vue schématique en coupe d'un modèle de travail sur laquelle a été réalisée une ailette de fixation de la maquette en cire ;

Figure 2, une vue en élévation latérale d'une bande de matériau composite selon l'invention ;

figure 3, une vue en plan de la figure 2.

Figure 4, une vue en coupe selon A-A de la figure 3.

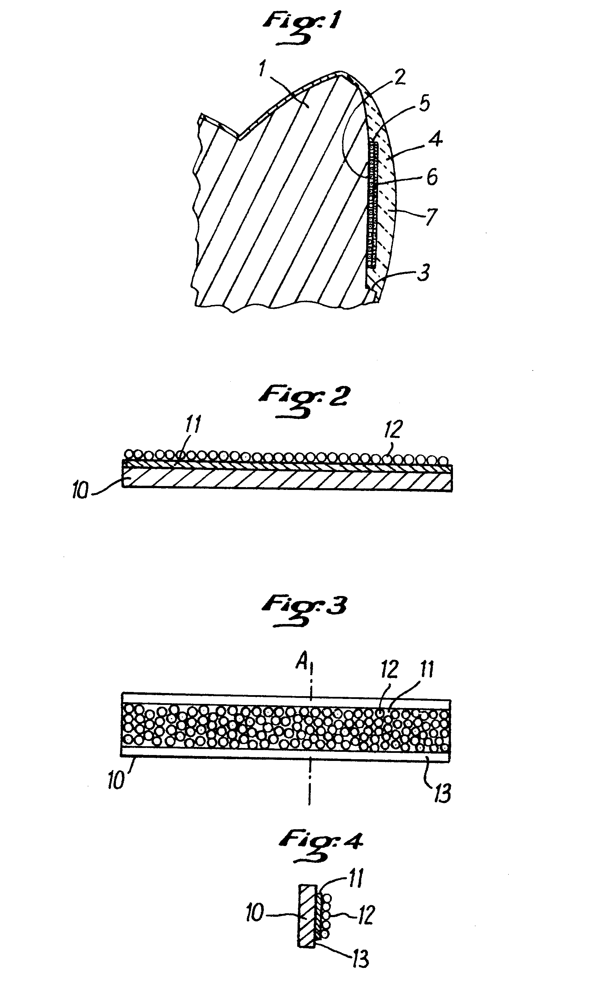

La figure 1 représente une vue en coupe d'un modèle de travail comportant une dent de support 1 sur la face interne de laquelle a été pratiquée une entaille verticale 2 présentant à sa base un épaulement 3. Cette entaille est remplie de cire 4 de façon à constituer une ailette en cire, qui, à la coulée, sera remplacée par une ailette en métal qui sera collée à la dent.
Comme on le voit sur cette figure 1, selon le procédé objet de la présente invention, on applique sur la face de l'entaille une multiplicité de petites billes 5 en matière plastique calcinable ayant un diamètre d'environ 0,1 millimètre. Il faut que ces billes 5 soient en contact direct avec la paroi de l'entaille 2 et elles ne peuvent donc pas être mises en place par collage. Elles sont donc collées sur un support 6, très mince, en matière plastique calcinable qui est appliqué contre l'entaille et est ensuite recouvert par de la cire 7. Le film 6 protège les billes 5 lorsqu'on met en place la cire 7 à l'état fondu. Lorsque la maquette en cire est terminée, l'intrados de ses ailettes comporte alors une multiplicité de petites billes en matière plastique calcinable. Lorsque l'on procède ensuite au moulage de l'armature métallique par le procédé usuel de coulée à cire perdue, on retrouve sur l'intrados des ailettes de l'armature métallique une multiplicité de petites sphères métalliques entre lesquelles le matériau de collage va pouvoir s'immiscer.

Les figures 2 à 4 illustrent le matériau composite qui, de préférence, est utilisé pour la mise en oeuvre de ce procédé.

Sur une bande de cire 10 ayant une épaisseur d'environ 0,2 mm, on applique un film plastique 11 doublement encollé. Ce film 11 du fait qu'il est doublement encollé adhère contre la bande de cire 10. Puis sur l'autre face du film 11 on saupoudre des billes 12 en une matière plastique calcinable ayant un diamètre d'environ 0,1 mm ; ces billes adhèrent sur le film 11 collant ; les billes en excès, non collées, sont éliminées par secouage.

On obtient ainsi une bande de matériau composite constitué : d'une bande de cire 10, d'une bande de film 11 et d'une couche 12 de billes.

Le film 11 est très mince, et en matière calcinable, mais ne se ramollit pas ou peu à la température à laquelle la cire est liquide de façon à constituer un film protecteur pour les billes 12. L'épaisseur du film 11 étant très faible, l'épaisseur totale du matériau composite est d'environ 0,3 mm.

Au lieu de bandes 10 et 11, on peut utiliser des feuilles.

On découpe dans les bandes ou feuilles de matériau composite 10-11-12 des morceaux correspondant aux ailettes de l'armature de prothèse à réaliser et on les applique contre les parois des entailles 2 et on les sertie à la cire coulée ; on élabore ensuite sans risque la maquette en cire, car les apports successifs de cire liquide peuvent être faits sans détériorer les billes, ni risquer que de la cire liquide ne vienne s'immiscer entre les billes 12 et la paroi de l'entaille 2.

On peut comme cela est représenté aux figures 3 et 5 réaliser des bandes en laissant un bord 13 uniquement en cire sur une largeur d'environ 1 mm, ce qui facilitera sa mise en place.

Revendications de brevet.

1 Procédé de fabrication d'armature métalliques de prothèses dentaires destinées à être collées contre des entailles pratiquées sur les dents de support, lesdites armatures étant moulées selon la technique de la cire perdue, caractérisé par le fait que lors de l'élaboration de la maquette en cire, on applique contre la paroi de l'entaille (2) reproduite sur le modèle de travail (1) une multiplicité de billes (5) en matière plastique calcinable, qui sont ensuite recouvertes par la cire (7).

2. Procédé selon la revendication 1, selon lequel les billes (5) sont collées sur un film (6) qui est appliqué contre l'entaille (2) avant d'être recouverte de cire (7).

3. Procédé selon la revendication 2, selon lequel on utilise un matériau composite constitué par un film (11) à double encollage comportant sur une de ses faces une multiplicité de billes (12) et sur l'autre face une couche de cire (10).

4. Matériau composite pour la mise en oeuvre du procédé selon la revendication 3, caractérisé par le fait qu'il est constitué par un film (11) à double encollage, comportant une multiplicité de billes (12) collées sur une de ses faces et une couche de cire (10) sur l'autre.

5. Matériau composite selon la revendication 4, dans lequel les billes (12) ont un diamètre de l'ordre de 0,1 mm, la couche de cire (10) une épaisseur de l'ordre de 0,2 mm, le film (11) étant très mince de sorte que l'épaisseur du matériau composite soit d'environ 0,3 mm.

6. Matériau composite selon l'une des revendications 4 ou 5, caractérisé par le fait qu'il est constitué en bandes ou en feuilles.

7. Matériau composite selon la revendication 6, caractérisé par le fait qu'il est constitué en bandes, comportant des bords (13) constitués uniquement de cire.

Fig.1

Fig.2

Fig.3

Fig.4